(19) Europäisches Patentamt
European Patent Office
Office européen des brevets

(11) EP 1 936 408 A1

(12) **EUROPEAN PATENT APPLICATION**

(43) Date of publication:
**25.06.2008 Bulletin 2008/26**

(21) Application number: **07023283.0**

(22) Date of filing: **30.11.2007**

(51) Int Cl.:
***G02B 5/30*** *(2006.01)* ***B29C 55/20*** *(2006.01)*
***C08L 1/12*** *(2006.01)* ***G02F 1/1335*** *(2006.01)*

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.12.2006 JP 2006345677**

(71) Applicant: **NITTO DENKO CORPORATION**
**Ibaraki**
**Osaka 567-8680 (JP)**

(72) Inventors:
- **Sugino, Youichirou**
**Ibaraki,**
**Osaka 567-8680 (JP)**
- **Chiba, Tsuyoshi**
**Ibaraki,**
**Osaka 567-8680 (JP)**
- **Tomoguchi, Naoki**
**Ibaraki,**
**Osaka 567-8680 (JP)**

(74) Representative: **Koepe, Gerd L.**
**Koepe & Partner,**
**Robert-Koch-Strasse 1**
**80538 München (DE)**

(54) **Optical film and polarizing plate using a negative wavelength dispersion methacrylic resin**

(57) Provided are an optical film which has high heat resistance, high transparency, and high mechanical strength, and has a sufficient retardation compensation function with a reverse wavelength dispersion characteristics, and a polarizing plate having such an optical film and a polarizer. Further, an image display apparatus of high quality using such a polarizing plate is provided. The optical film of the present invention includes a (meth) acrylic resin having a lactone ring as a main component, in which the in-plane retardation Re(450) at a wavelength of 450 nm divided by the in-plane retardation Re(600) at a wavelength of 600 nm is less than 1.0.

FIG. 1

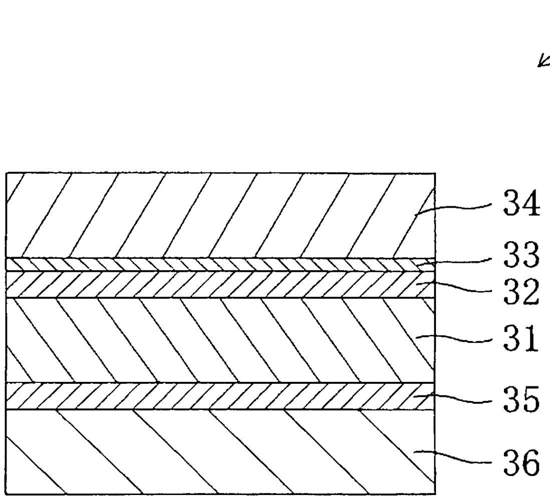




Printed by Jouve, 75001 PARIS (FR)

## Description

This application claims priority under 35 U.S.C. Section 119 to Japanese Patent Application No. 2006-345677 filed on December 22, 2006, which is herein incorporated by references.

## BACKGROUND OF THE INVENTION

### 1. Field of the Invention

The present invention relates to an optical film, a polarizing plate, and an image display apparatus such as a liquid crystal display apparatus, an organic EL display apparatus, or a PDP including at least the one polarizing plate.

### 2. Description of the Related Art

A liquid crystal display apparatus must have polarizing plates arranged on both sides of a glass substrate forming the surface of a liquid crystal panel due to its image forming system. An example of such a polarizing plate to be used is generally produced by attaching a polarizer protective film on each side of a polarizer made of a polyvinyl alcohol-based film and a dichromatic substance such as iodine by using a polyvinyl alcohol-based adhesive.

One example of optical properties desired in a polarizer protective film is a wavelength dispersion characteristics. In a liquid crystal display apparatus, it is important to minimize the dependence on each wavelength of polarized light having passed through liquid crystal, and as a result of a simulation, it was found that the above dependence can be eliminated by having a reverse wavelength dispersion characteristics.

As the polarizer protective film, a cellulose-based resin film made of triacetyl cellulose or the like is widely used. However, the cellulose-based resin film has insufficient heat and humidity resistance and thus has a problem in that properties such as a degree of polarization and a hue of a polarizing plate degrade when a polarizing plate using a cellulose-based resin film as a polarizer protective film is used under high temperature or high humidity conditions. Further, a cellulose-based resin film causes retardation with respect to incident light in an oblique direction. Along with recent increase in dimensional of a liquid crystal display, the retardation has increasingly significant effects on viewing angle properties.

As a resin material excellent in heat resistance and optical transparency, a (meth)acrylic resin such as polymethacrylate has been well known, and the use of a (meth)acrylic resin as a polarizer protective film has been reported (e.g., see JP 2000-356714 A, JP 2002-258051 A). However, a (meth)acrylic resin is brittle and is likely to break, and thus has a problem of transportability such as breakage during transportation of a film, and a problem of poor productivity. Therefore, it is difficult to use a (meth)acrylic resin as it is as a polarizer protective film.

As a resin having higher heat resistance, higher transparency, and higher mechanical strength compared with a conventional (meth)acrylic resin, a (meth)acrylic resin having a lactone ring structure has been known (e.g., see JP 2000-230016 A, JP 2001-151814 A, JP 2002-120326 A, and JP 2002-254544 A). However, it was found that, in the case of using a (meth)acrylic resin having a lactone ring structure as it is as a polarizer protective film, the polarizer protective film has a positive wavelength dispersion characteristics and it is difficult to eliminate the dependence on each wavelength of polarized light having passed through liquid crystal.

## SUMMARY OF THE INVENTION

The present invention has been made in view of solving conventional problems as described above, and an object of the present invention is to provide (1) an optical film having high heat resistance, high transparency, and high mechanical strength, and having a sufficient retardation compensation function with a reverse wavelength dispersion characteristics, (2) a polarizing plate having such an optical film and a polarizer, and (3) an image display apparatus of high quality using such a polarizing plate.

The optical film according to the present invention includes a (meth)acrylic resin having a lactone ring as a main component, in which an in-plane retardation Re(450) at a wavelength of 450 nm/an in-plane retardation Re(600) at a wavelength of 600 nm is less than 1.0.

In a preferred embodiment of the present invention, the optical film includes a negative birefringence material.

In the preferred embodiment of the present invention, the negative birefringence material is contained in a ratio of 5 to 40% by weight with respect to the (meth)acrylic resin having a lactone ring.

In the preferred embodiment of the present invention, the negative birefringence material is at least one kind of a styrene-based polymer and fluorene.

In the preferred embodiment of the present invention, the styrene-based polymer is at least one kind selected from the styrene/maleic anhydride copolymer, a styrene/acrylonitrile copolymer, and a styrene/maleimide copolymer.

In the preferred embodiment of the present invention, the optical film has Tg of 110°C or more.
According to another aspect of the present invention, a polarizing plate is provided. The polarizing plate according to the present invention has an optical film of the present invention on at least one surface of a polarizer.
In a preferred embodiment of the present invention, the polarizing plate includes an adhesive layer between the polarizer and the optical film.
In the preferred embodiment of the present invention, the adhesive layer is formed of a polyvinyl alcohol-based adhesive.
In the preferred embodiment of the present invention, the polarizing plate includes an easy-adhesive layer between the polarizer and the optical film.
In the preferred embodiment of the present invention, a polarizing plate according to the present invention further includes as at least one of an outermost layer a pressure-sensitive adhesive layer.
According to still another aspect of the present invention, an image display apparatus is provided. The image display apparatus of the present invention includes at least one polarizing plate of the present invention.
According to the present invention, an optical film can be provided, which has high heat resistance, high transparency, and high mechanical strength, and has a sufficient retardation compensation function with a reverse wavelength dispersion characteristics. Further, a polarizing plate having such an optical film and a polarizer can be provided. In addition, an image display apparatus of high quality using such a polarizing plate can be provided.
The above effects can be expressed in an optical film containing a (meth)acrylic resin having a lactone ring as a main component, for example, by setting an in-plane retardation Re(450) at a wavelength of 450 nm/in-plane retardation Re(600) at a wavelength of 600 nm to be less than 1.0 with any appropriate means of including a predetermined amount of a negative birefringence material.

## BRIEF DESCRIPTION OF THE DRAWINGS

In the accompanying drawings:

FIG. **1** is a cross-sectional view showing an example of a polarizing plate of the present invention; and
FIG. **2** is a schematic cross-sectional view of a liquid crystal display apparatus according to a preferred embodiment of the present invention.

## DESCRIPTION OF THE PREFERRED EMBODIMENTS

Hereinafter, preferred embodiments of the present invention will be described, but the present invention is not limited thereto.

(Optical film)

An optical film according to the present invention contains a (meth)acrylic resin having a lactone ring as a main component.
Regarding the above (meth)acrylic resin, Tg (glass transition temperature) is preferably 115°C or more, more preferably 120°C or more, much more preferably 125°C or more, and particularly preferably 130°C or more. When the optical film contains a (meth)acrylic resin with Tg (glass transition temperature) of 115°C or more as a main component, for example, in a case where the optical film is finally incorporated in a polarizing plate, the resultant polarizing plate is likely to become excellent in durability. The upper limit value of Tg of the above (meth)acrylic resin is not particularly limited, but it is preferably 170°C or less in terms of formability and the like.
Examples of the (meth)acrylic resin having a lactone ring structure include (meth)acrylic resins having a lactone ring structure described in JP 2002-120326 A and JP 2002-254544 A.
The (meth)acrylic resin having a lactone ring structure preferably has a lactone ring structure represented by the following General Formula (1).

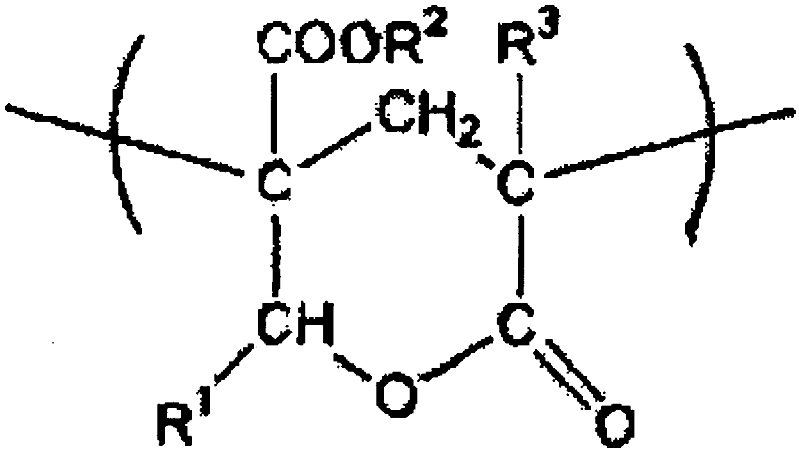

(1)

(In General Formula (1), each of $R^1$, $R^2$, and $R^3$ independently represents a hydrogen atom or an organic residue containing 1 to 20 carbon atoms. The organic residue may contain oxygen atoms.)

The content ratio of the lactone ring structure represented by General Formula (1) in a structure of a (meth) acrylic resin having a lactone ring structure is preferably 5 to 90% by weight, more preferably 10 to 70% by weight, much more preferably 10 to 60% by weight, and particularly preferably 10 to 50% by weight. When the content ratio of the lactone ring structure represented by General Formula (1) in the structure of the (meth)acrylic resin having a lactone ring structure is less than 5% by weight, there is a possibility that heat resistance, solvent resistance, and surface hardness may become insufficient. When the content ratio of the lactone ring structure represented by General Formula (1) in the structure of the (meth)acrylic resin having a lactone ring structure is more than 90% by weight, there is a possibility that a forming processing property may become poor.

The weight average molecular weight of the (meth)acrylic resin having a lactone ring structure is preferably 1,000 to 2,000,000, more preferably 5,000 to 1,000,000, much more preferably 10,000 to 500,000, and particularly preferably 50,000 to 500,000. When the weight average molecular weight is out of the above range, there is a possibility that the effects of the present invention may not be exhibited sufficiently.

Regarding the (meth)acrylic resin having a lactone ring structure, the total light beam transmittance of a molding obtained by injection molding measured by a method in accordance with ASTM-D-1003 is preferably as high as possible, and is preferably 85% or more, more preferably 88% or more, and much more preferably 90% or more. When the total light beam transmittance is less than 85%, transparency decreases, and consequently, there is a possibility that the resultant molding may not be used for an intended application.

The content of the (meth)acrylic resin having a lactone ring structure in the optical film of the present invention is preferably 50 to 99% by weight, more preferably 60 to 98% by weight, and much more preferably 70 to 97% by weight. In a case where the content of the (meth)acrylic resin having a lactone ring structure in the optical film is less than 50% by weight, there is a possibility that inherent high heat resistance and high transparency of the (meth)acrylic resin having a lactone ring structure may not be sufficiently reflected, and in a case where the content of the (meth)acrylic resin having a lactone ring structure exceeds 99% by weight, the resultant optical film may have poor mechanical strength.

The in-plane retardation Re (450) at a wavelength of 450 nm/in-plane retardation Re(600) at a wavelength of 600 nm of the optical film of the present invention is less than 1.0, preferably 0.99 or less, more preferably 0.98 or less, and much more preferably 0.97 or less. The lower limit value is preferably 0.01 or more, more preferably 0.02 or more, and much more preferably 0.03 or more. When the in-plane retardation Re(450) at a wavelength of 450 nm/in-plane retardation Re(600) at a wavelength of 600 nm is less than 1.0, an optical film having a sufficient retardation compensation function with a reverse wavelength dispersion characteristics can be obtained.

In the optical film of the present invention, any appropriate means can be adopted as means for setting the in-plane retardation Re(450) at a wavelength of 450 nm/in-plane retardation Re(600) at a wavelength of 600 nm to be less than 1.0. Preferably, the optical film of the present invention contains a negative birefringence material.

In a case where the optical film of the present invention contains a negative birefringence material, the negative birefringence material is preferably contained with respect to the above (meth)acrylic resin having a lactone ring in a ratio of 5 to 40% by weight, more preferably 7 to 35% by weight, and much more preferably 10 to 30% by weight. If the content ratio of the negative birefringence material is in the above range, the in-plane retardation Re(450) at a wavelength of 450 nm/in-plane retardation(600) at a wavelength of 600 nm can be set to be less than 1.0.

The above negative birefringence material is preferably at least one kind of a styrene polymer and fluorene.

Examples of the above styrene polymer include a single polymer of a styrene monomer (polystyrene), and a copolymer of a styrene monomer and another copolymerizable monomer. Further, the above styrene polymer may be a modified product of these polymers. Examples of the copolymer of a styrene monomer and another copolymerizable monomer include a styrene/maleic anhydride copolymer, a styrene/acrylonitrile copolymer, and a styrene/maleimide copolymer.

Tg of the optical film of the present invention is preferably 110°C or more, more preferably 113°C or more, much more preferably 115°C or more, and particularly preferably 118°C or more. The upper limit value is preferably 170°C or less in terms of formability and the like. When Tg is in the above range, an optical film excellent in heat resistance can be obtained.

The optical film of the present invention may be stretched by longitudinal stretching and/or lateral stretching.

The above stretching may be stretching by only longitudinal stretching (free-end uniaxial stretching) or by only lateral stretching (fixed-end uniaxial stretching), but it is preferably sequential stretching or simultaneous biaxial stretching with a longitudinal stretching ratio of 1.1 to 3.0 times and a lateral stretching ratio of 1.1 to 3.0 times. With stretching by only longitudinal stretching (free-end uniaxial stretching) and by only lateral stretching (fixed-end uniaxial stretching), the film strength increases only in a stretching direction, and the film strength does not increase in a direction perpendicular to the stretching direction. Thus, there is a possibility that sufficient film strength may not be obtained as a whole film. The above longitudinal stretching ratio is more preferably 1.2 to 2.5 times, and more preferably 1.3 to 2.0 times. The above lateral stretching ratio is more preferably 1.2 to 2.5 times, and more preferably 1.4 to 2.5 times. In a case where the longitudinal stretching ratio and the lateral stretching ratio are less than 1.1 times, the stretching ratio is too low, and thus, there is a possibility that the effect of stretching may hardly be obtained. When the longitudinal stretching ratio and the lateral stretching ratio exceed 3.0 times, stretching breakage is likely to occur due to the problem of smoothness of a film edge face.

The above stretching temperature is preferably Tg to (Tg + 30°C) of a film to be stretched. When the above stretching temperature is lower than Tg, a film may be broken. When the above stretching temperature exceeds (Tg + 30°C), a film may start being melted to make it difficult to feed the film.

When the optical film of the present invention is stretched by longitudinal stretching and/or lateral stretching, the optical film has much more excellent optical properties and also becomes excellent in mechanical strength, and thus, the productivity and reworkability are further enhanced.

The optical film of the present invention may contain a UV-absorber, and general additives such as a stabilizer, a lubricant, a processing aid, a plasticizer, a shock-resistant aid, a retardation reducing agent, a flatting agent, an antimicrobial agent, and a fungicide.

The thickness of the optical film of the present invention is preferably 20 to 200 μm, more preferably 25 to 180 μm, and much more preferably 30 to 140 μm. When the thickness of the optical film is 20 μm or more, the optical film has appropriate strength and rigidity, so the handling of the optical film becomes satisfactory during secondary processing such as lamination and printing. Further, the retardation occurring due to the stress during take-up can be easily controlled, and the film can be produced stably and easily. When the thickness of the optical film is 200 μm or less, film take-up is easy, and a line speed, productivity, and controllability become easy.

YI at a thickness of 80 μm of the optical film of the present invention is preferably 1.3 or less, more preferably 1.27 or less, much more preferably 1.25 or less, still much more preferably 1.23 or less, and particularly preferably 1.20 or less. When YI at a thickness of 80 μm exceeds 1.3, there is a possibility that excellent optical transparency may not be exhibited. YI can be obtained by three stimulus values (X, Y, Z) of colors obtained by measurement using a high-speed integrating sphere type spectral transmittance meter (trade name: DOT-3C: manufactured by Murakami Color Research Laboratory) in accordance with the following equation:

$$YI = ((1.28X - 1.06Z)/Y) \times 100$$

A b-value at a thickness of 80 μm of the optical film of the present invention (standard of a hue in accordance with a Hunter's colorimetric system) is preferably less than 1.5, and more preferably 1.0 or less. In a case where the b-value is 1.5 or more, there is a possibility that excellent optical transparency may not be exhibited due to the coloring of a film. The b-value can be obtained, for example, by cutting a polarizer protective film sample into 3 cm per side and measuring a hue using the high-speed integrating sphere type spectral transmittance meter (trade name: DOT-3C: manufactured by Murakami Color Research Laboratory). Further, a hue can also be evaluated by a b-value in accordance with the Hunter's colorimetric system.

In the optical film of the present invention, the moisture permeability is preferably 100 $g/m^2 \cdot 24hr$ or less, and more preferably 60 $g/m^2 \cdot 24hr$ or less. When the above moisture permeability exceeds 100 $g/m^2 \cdot 24hr$, the optical system may have poor moisture resistance.

It is preferred that the optical film of the present invention also have excellent mechanical strength. The tensile strength is preferably 65 $N/mm^2$ or more, more preferably 70 $N/mm^2$ or more, much more preferably 75 $N/mm^2$ or more, and particularly preferably 80 $N/mm^2$ or more in an MD direction. The tensile strength is preferably 45 $N/mm^2$ or more, more preferably 50 $N/mm^2$ or more, much more preferably 55 $N/mm^2$ or more, and particularly preferably 60 $N/mm^2$ or more in a TD direction. The tensile elongation is preferably 6.5% or more, more preferably 7.0% or more, much more preferably 7.5% or more, and particularly preferably 8.0% or more in the MD direction. The tensile elongation is preferably 5.0% or more, more preferably 5.5% or more, much more preferably 6.0% or more, and particularly preferably 6.5% or more in the TD direction. In a case where the tensile strength or the tensile elongation are out of the above range, there is a possibility that excellent mechanical strength may not be exhibited.

The haze representing optical transparency of the optical film of the present invention is desirably as low as possible, preferably 5% or less, more preferably 3% or less, much more preferably 1.5% or less, and particularly preferably 1% or less. When the haze is 5% or less, a film can be provided with satisfactory clear feeling visually. Further, when the haze is 1.5% or less, even when the resultant optical film is used as a lighting member such as a window, visibility and lighting property are both obtained, and even when the resultant optical film is used as a front plate of a display apparatus, a display content can be visually recognized satisfactorily, so an industrial use value is high.

The optical film of the present invention may be produced by any method. For example, a method of producing a film by subjecting a material (resin composition) for forming a film containing a (meth)acrylic resin as a main component to extrusion molding (melt extrusion method such as T-die method and an inflation method), cast molding (melt casting, etc.), or calender molding can be preferably illustrated.

In the extrusion, unlike a dry lamination method, it is not necessary to dry and scatter a solvent in an adhesive used during processing, e.g., an organic solvent in an adhesive for dry lamination or to perform a solvent drying step, and thus the extrusion is excellent in productivity. As a specific example, there is a method of forming a film by supplying a resin composition as a material supplied to an extruder connected to a T-die, followed by melt kneading, extrusion, water-cooling, and withdrawing. The extruder may be of a monoaxial or biaxial screw type, and an additive such as a plasticizer or an antioxidant may be added.

The temperature for extrusion can be set appropriately, and when the glass transition temperature of a resin composition as a material is Tg(°C), (Tg + 80)°C to (Tg + 180)°C is preferred, and (Tg + 100)°C to (Tg + 150)°C is more preferred. When the temperature for extrusion is too low, a resin may not be formed due to lack of flowability. When the temperature for extrusion is too high, the viscosity of a resin becomes low, which may cause a problem in production stability such as non-uniform thickness of a formed product.

A resin composition forming the optical film of the present invention contains a UV-absorber, and general additives such as a stabilizer, a lubricant, a processing aid, a plasticizer, a shock-resistant aid, a retardation reducing agent, a flatting agent, an antimicrobial agent, and a fungicide.

The optical film of the present invention can be used by being laminated on another base material. For example, the optical film of the present invention can also be laminated on a base material such as glass, polyolefin resin, an ethylene vinylidene copolymer to be a high barrier layer, or polyester by multi-layer extrusion molding or multi-layer inflation molding with an adhesion resin layer. In a case where thermal adhesiveness is high, the adhesion layer may be omitted.

The optical film of the present invention can be used by being laminated on, for example, a lighting member for construction such as a window and a carport roof material, a lighting member for a vehicle such as a window, a lighting member for agriculture such as a greenhouse, an illumination member, a display member such as a front filter, in addition to the application for protecting a polarizer (polarizer protective film). Further, the optical film of the present invention can also be used by being laminated on a housing of a household electrical appliance, a vehicle interior member, an interior construction material, a wall paper, a decorative laminate, an entrance door, a window frame, a baseboard, or the like conventionally covered with a (meth)acrylic resin.

(Polarizing plate)

The polarizing plate of the present invention is a polarizing plate including the optical film of the present invention and a polarizer. More specifically, the polarizing plate according to the present invention includes the optical film of the present invention at least on one surface side of the polarizer. As shown in FIG. 1, one preferred embodiment of the polarizing plate of the present invention is an embodiment in which one surface of a polarizer **31** is bonded to an optical film **34** of the present invention via an adhesive layer **32** and an easy-adhesive layer **33,** and the other surface of the polarizer **31** is bonded to a polarizer protective film **36** via the adhesive layer **35.** The polarizer protective film **36** may be the optical film of the present invention, or may be any appropriate polarizer protective film.

The above polarizer is preferably formed of a polyvinyl alcohol-based resin. As the polarizer formed of a polyvinyl alcohol-based resin, a polarizer obtained by dyeing a polyvinyl alcohol-based rein film with dichromatic substance (typically, iodine, dichromatic dye), followed by uniaxial stretching can be used. The polymerization degree of the polyvinyl

alcohol-based resin constituting the polyvinyl alcohol-based resin film is preferably 100 to 5,000, and more preferably 1,400 to 4,000. The polyvinyl alcohol-based resin film constituting the polarizer can be formed by any appropriate method (e.g., a flow casting method of flow-casting a solution in which a resin is dissolved in water or an organic solvent to make a film, a casting method, and an extrusion method). The thickness of the polarizer can be appropriately set in accordance with the purpose and application of an LCD in which a polarizing plate is used, and is typically 5 to 80 μm.

For producing a polarizer, any appropriate method may be employed in accordance with the purpose, materials to be used, conditions, and the like. Typically, employed is a method in which the polyvinyl alcohol-based resin film is subjected to a series of production steps including swelling, coloring, crosslinking, stretching, water washing, and drying steps. In each of the treatment steps excluding the drying step, the polyvinyl alcohol-based resin film is immersed in a bath containing a solution to be used in each step. The order, number of times, and absence or presence of swelling, coloring, crosslinking, stretching, water washing, and drying steps may be appropriately set in accordance with the purpose, materials to be used, conditions, and the like. For example, several treatments may be conducted at the same time in one step, or specific treatments may be omitted. More specifically, stretching treatment, for example, may be conducted after coloring treatment, before coloring treatment, or at the same time as swelling treatment, coloring treatment, and crosslinking treatment. Further, for example, crosslinking treatment is preferably conducted before and/or after stretching treatment. Further, for example, water washing treatment may be conducted after each treatment or only after specific treatments.

The swelling step is typically conducted by immersing the polyvinyl alcohol-based resin film in a treatment bath (swelling bath) filled with water. This treatment allows washing away of contaminants from a surface of the polyvinyl alcohol-based resin film, washing away of an anti-blocking agent, and swelling of the polyvinyl alcohol-based resin film, to thereby prevent non-uniformity such as uneven coloring. The swelling bath may appropriately contain glycerin, potassium iodide, or the like. The temperature of the swelling bath is typically about 20 to 60°C, and the immersion time in the swelling bath is typically about 0.1 to 10 minutes.

The coloring step is typically conducted by immersing the polyvinyl alcohol-based resin film in a treatment bath (coloring bath) containing a dichromatic substance such as iodine. As a solvent to be used for a solution of the coloring bath, water is generally used, but an appropriate amount of an organic solvent having compatibility with water may be added. The dichromatic substance is typically used in a ratio of 0.1 to 1.0 part by weight with respect to 100 parts by weight of the solvent. In a case where iodine is used as a dichromatic substance, the solution of the coloring bath preferably further contains an assistant such as an iodide for improving a coloring efficiency. The assistant is used in a ratio of preferably 0.02 to 20 parts by weight, and more preferably 2 to 10 parts by weight with respect to 100 parts by weight of the solvent. Specific examples of the iodide include potassium iodide, lithium iodide, sodium iodide, zinc iodide, aluminum iodide, lead iodide, copper iodide, barium iodide, calcium iodide, tin iodide, and titanium iodide. The temperature of the coloring bath is typically about 20 to 70°C, and the immersion time in the coloring bath is typically about 1 to 20 minutes.

The crosslinking step is typically conducted by immersing in a treatment bath (crosslinking bath) containing a crosslinking agent the polyvinyl alcohol-based resin film that has undergone the coloring treatment. The crosslinking agent employed may be any appropriate crosslinking agent. Specific examples of the crosslinking agent include: a boron compound such as boric acid or borax; glyoxal; and glutaraldehyde. The crosslinking agent may be used alone or in combination. As a solvent to be used for a solution of the crosslinking bath, water is generally used, but an appropriate amount of an organic solvent having compatibility with water may be added. The crosslinking agent is typically used in a ratio of 1 to 10 parts by weight with respect to 100 parts by weight of the solvent. In a case where a concentration of the crosslinking agent is less than 1 part by weight, sufficient optical properties are often not obtained. In a case where the concentration of the crosslinking agent is more than 10 parts by weight, stretching force to be generated on the film during stretching increases and a polarizing plate to be obtained may shrink. The solution of the crosslinking bath preferably further contains an assistant such as an iodide for obtaining uniform properties in the same plane. The concentration of the assistant is preferably 0.05 to 15 wt%, and more preferably 0.5 to 8 wt%. Specific examples of the iodide are the same as in the case of the coloring step. The temperature of the crosslinking bath is typically about 20 to 70°C, and preferably 40 to 60°C. The immersion time in the crosslinking bath is typically about 1 second to 15 minutes, and preferably 5 seconds to 10 minutes.

The stretching step may be conducted at any stage as described above. Specifically, the stretching step may be conducted after the coloring treatment, before the coloring treatment, at the same time as the swelling treatment, the coloring treatment, and the crosslinking treatment, or after the crosslinking treatment. A cumulative stretching ratio of the polyvinyl alcohol-based resin film needs to be 5 times or more, preferably 5 to 7 times, and more preferably 5 to 6.5 times. In a case where the cumulative stretching ratio is less than 5 times, a polarizing plate having a high degree of polarization may be hard to obtain. In a case where the cumulative stretching ratio is more than 7 times, the polyvinyl alcohol-based resin film (polarizer) may easily break. A specific method of stretching employed may be any appropriate method. For example, in a case where a wet stretching method is employed, a polyvinyl alcohol-based resin film is stretched in a treatment bath (stretching bath) to a predetermined ratio. A solution of the stretching bath to be preferably

used is a solution in which various metal salts or compounds of iodine, boron, or zinc are added to a solvent such as water or an organic solvent (such as ethanol).

The water washing step is typically conduced by immersing in a treatment bath (water washing bath) the polyvinyl alcohol-based resin film that has undergone the various treatments. The water washing step allows washing away of unnecessary remains from the polyvinyl alcohol-based resin film. The water washing bath may contain pure water or an aqueous solution containing iodide (such as potassium iodide or sodium iodide). The concentration of an aqueous iodide solution is preferably 0.1 to 10 weight%. The aqueous iodide solution may contain an assistant such as zinc sulfate or zinc chloride. The temperature of the water washing bath is preferably 10 to 60°C, and more preferably 30 to 40°C, and the immersion time is typically 1 second to 1 minute. The water washing step may be conducted only once, or may be conducted a plurality of times as required. In a case where the water washing step is conducted a plurality of times, the kind and concentration of the additive contained in the water washing bath to be used for each treatment may be appropriately adjusted. For example, the water washing step includes a step of immersing a polymer film in an aqueous potassium iodide solution (0.1 to 10 weight%, 10 to 60°C) for 1 second to 1 minute and a step of washing the polymer film with pure water.

The drying step may employ any appropriate drying method (such as natural drying, air drying, or heat drying). For example, in heat drying, a drying temperature is typically 20 to 80°C, and a drying time is typically 1 to 10 minutes. In the manner as described above, the polarizer is obtained.

The polarizing plate of the present invention includes the above polarizer and the optical film of the present invention, and it is preferred that an adhesive layer be formed between the above polarizer and the above optical film.

It is preferred that the above adhesive layer be formed of a polyvinyl alcohol-based adhesive. The polyvinyl alcohol-based adhesive contains a polyvinyl alcohol-based resin and a cross-linking agent.

Examples of the aforementioned polyvinyl alcohol-based resin include, but not limited to: a polyvinyl alcohol obtained by saponifying polyvinyl acetate; derivatives thereof; a saponified product of a copolymer obtained by copolymerizing vinyl acetate with a monomer having copolymerizability with vinyl acetate; and a modified polyvinyl alcohol obtained by modifying polyvinyl alcohol to acetal, urethane, ether, graft polymer, phosphate, or the like. Examples of the monomer include: unsaturated carboxylic acids such as maleic anhydrides or maleic acid, fumaric acid, crotonic acid, itaconic acid, and (meth)acrylic acid and esters thereof; $\alpha$-olefin such as ethylene and propylene; (sodium) (meth) allylsulfonate; sodium sulfonate (monoalkylmalate); sodium disulfonate alkylmalate; N-methylol acrylamide; alkali salts of acrylamide alkylsulfonate; N-vinylpyrrolidone; and derivatives of N-vinylpyrrolidone. The polyvinyl alcohol-based resins may be used alone or in combination.

In terms of adhesiveness, the polyvinyl alcohol-based resin has an average degree of polymerization of preferably 100 to 3,000, and more preferably 500 to 3,000, and an average degree of saponification of preferably 85 to 100 mol%, and more preferably 90 to 100 mol%.

A polyvinyl alcohol-based resin having an acetoacetyl group may be used as the aforementioned polyvinyl alcohol-based resin. The polyvinyl alcohol-based resin having an acetoacetyl group is a polyvinyl alcohol-based adhesive having a highly reactive functional group and is preferred from the viewpoint of improving durability of a polarizing plate.

The polyvinyl alcohol-based resin having an acetoacetyl group can be obtained in a reaction between the polyvinyl alcohol-based resin and diketene through a known method. Examples of the known method include: a method involving dispersing the polyvinyl alcohol-based resin in a solvent such as acetic acid, and adding diketene thereto; and a method involving dissolving the polyvinyl alcohol-based resin in a solvent such as dimethylformamide or dioxane, in advance, and adding diketene thereto. Another example of the known method is a method involving directly bringing diketene gas or a liquid diketene into contact with polyvinyl alcohol.

A degree of acetoacetyl modification of the polyvinyl alcohol-based resin having an acetoacetyl group is not particularly limited as long as it is 0.1 mol% or more. A degree of acetoacetyl modification of less than 0.1 mol% provides insufficient water resistance with the adhesive layer and is inappropriate. The degree of acetoacetyl modification is preferably 0.1 to 40 mol%, and more preferably 1 to 20 mol%. A degree of acetoacetyl modification of more than 40 mol% decreases the number of reaction sites with a crosslinking agent and provides a small effect of improving the water resistance. The degree of acetoacetyl modification is a value measured by NMR.

As the above cross-linking agent, those which are used in a polyvinyl alcohol-based adhesive can be used without any particular limit. A compound having at least two functional groups each having reactivity with a polyvinyl alcohol-based resin can be used as the crosslinking agent. Examples of the compound include: alkylene diamines having an alkylene group and two amino groups such as ethylene diamine, triethylene diamine, and hexamethylene dimamine (of those, hexamethylene diamine is preferred); isocyanates such as tolylene diisocyanate, hydrogenated tolylene diisocyanate, a trimethylene propane tolylene diisocyanate adduct, triphenylmethane triisocyanate, methylene bis(4-phenylmethane)triisocyanate, isophorone diisocyanate, and ketoxime blocked compounds and phenol blocked compounds thereof; epoxides such as ethylene glycol diglycidyl ether, polyethylene glycol diglycidyl ether, glycerin di- or triglycidyl ether, 1,6-hexane diol diglycidyl ether, trimethylol propane triglycidyl ether, diglycidyl aniline, and diglycidyl amine; monoaldehydes such as formaldehyde, acetaldehyde, propione aldehyde, and butyl aldehyde; dialdehydes such as

glyoxal, malondialdehyde, succinedialdehyde, glutardialdehyde, maleic dialdehyde, and phthaldialdehyde; an amino-formaldehyde resin such as a condensate of formaldehyde with methylol urea, methylol melamine, alkylated methylol urea, alkylated methylol melamine, acetguanamine, or benzoguanamine; and sodium, potassium, divalent metals such as magnesium, calcium, aluminum, iron, and nickel or salts of trivalent metals and oxides thereof. A melamine-based crosslinking agent is preferred as the crosslinking agent, and methylolmelamine is particularly preferred.

A mixing amount of the crosslinking agent is preferably 0.1 to 35 parts by weight, and more preferably 10 to 25 parts by weight with respect to 100 parts by weight of the polyvinyl alcohol-based resin. Meanwhile, for improving the durability, the crosslinking agent may be mixed within a range of more than 30 parts by weight and 46 parts by weight or less with respect to 100 parts by weight of the polyvinyl alcohol-based resin. In particular, in a case where the polyvinyl alcohol-based resin having an acetoacetyl group is used, the crosslinking agent is preferably used in an amount of more than 30 parts by weight. The crosslinking agent is mixed within a range of more than 30 parts by weight and 46 parts by weight or less, to thereby improve the water resistance.

In the above polyvinyl alcohol-based adhesive, coupling agents such as a silane coupling agent and a titanium coupling agent, various kinds of tackifiers, a UV-absorber, an antioxidant, stabilizers such as a heat-resistant stabilizer and a hydrolysis-resistant stabilizer, and the like can also be compounded.

The surface of the optical film of the present invention, which comes into contact with a polarizer, can be subjected to easy-adhesion processing for enhancing the adhesive property. Examples of the easy-adhesion processing include corona treatment, plasma treatment, low-pressure UV treatment, and saponification.

It is preferred that an easy-adhesion layer (anchor layer) be formed on the surface of the optical film of the present invention, which comes into contact with a polarizer, for enhancing the adhesive property.

An example of the above easy-adhesion layer includes a silicone layer having a reactive functional group. Examples of the material for the silicone layer having a reactive functional group are not limited to, but preferably include alkoxysilanols containing an isocyanate group, alkoxysinaols containing an amino group, alkoxysilanols containing a mercapto group, alkoxysilanols containing carboxyl group, alkoxysilanols containing an epoxy group, alkoxysilanols containing a vinyl-type unsaturation group, alkoxysilanols containing a halogen group, and alkoxysilanols containing an isocyanate group, and amino-based silanol is preferred. The adhesive strength can be increased by adding a titanium-based catalyst or a tin-based catalyst for allowing the above silanol to react efficiently. Further, another additive may be added to the above silicone having a reactive functional group. Specific examples include tackifiers such as a terpene resin, a phenol resin, a terpene-phenol resin, a rosin resin, and a xylene resin, a UV-absorber, an antioxidant, a heat-resistant stabilizer.

The above silicone layer having a reactive functional group is formed by coating and drying in accordance with a known technology. The thickness of the silicone layer after drying is preferably 1 to 100 nm, and more preferably 10 to 80 nm. During coating, silicone having a reactive functional group may be diluted with a solvent. Examples of the dilution solvent are not particularly limited, and include alcohols. The dilution concentration is not particularly limited to, but is preferably 1 to 5% by weight, and more preferably 1 to 3% by weight.

The above adhesive layer is formed by applying the above adhesive to either side or both sides of the optical film of the present invention and/or either side or both sides of the polarizer. The optical film of the present invention and the polarizer are attached to each other, followed by drying, whereby an adhesive layer made of an applied dry layer is formed. After an adhesive layer is formed, the optical film of the present invention and the polarizer can be attached to each other. The polarizer and the polarizer protective film can be attached to each other with a roll laminator or the like. The heat drying temperature and drying time are appropriately determined depending upon the kind of an adhesive.

Too large thickness of the adhesive layer after drying is not preferred in view of the adhesive property of the optical film. Therefore, the thickness of the adhesive layer is preferably 0.01 to 10 $\mu$m, and more preferably 0.03 to 5 $\mu$m.

The optical film of the present invention is attached to the polarizer by bonding one side of the optical film of the present invention to both surfaces of the polarizer.

Further, the optical film of the present invention can be attached to the polarizer by bonding one side of the optical film of the present invention to one surface of the polarizer, and attaching a cellulose-based resin film to the other surface of the polarizer.

The cellulose-based resin film is not particularly limited. However, triacetyl cellulose is preferred in terms of transparency and an adhesive property. The thickness of the cellulose-based resin film is preferably 30 to 100 $\mu$m, and more preferably 40 to 80 $\mu$m. When the thickness is smaller than 30 $\mu$m, the film strength decreases to degrade workability, and when the thickness is larger than 100 $\mu$m, the light transmittance decreases remarkably in terms of durability.

The polarizing plate according to the present invention may have a pressure-sensitive adhesive layer as at least one of an outermost layer (such a polarizing plate may be referred to as polarizing plate of a pressure-sensitive adhesion type).

The pressure-sensitive adhesive forming the aforementioned pressure-sensitive adhesive layer is not particularly limited. However, for example, a pressure-sensitive adhesive containing as a base polymer an acrylic polymer, a silicone-based polymer, polyester, polyurethane, polyamide, polyether, fluorine-based polymer, or rubber-based polymer can be appropriately selected to be used. In particular, a pressure-sensitive adhesive such as an acrylic pressure-sensitive adhesive is preferably used, which is excellent in optical transparency, exhibits appropriate wettability and pressure-sensitive adhesion properties of a cohesive property and an adhesive property, and is excellent in weather resistance and heat resistance. In particular, an acrylic pressure-sensitive adhesive made of an acrylic polymer containing 4 to 12 carbon atoms is preferred.

In addition to the above, in terms of the prevention of a foaming phenomenon and a peeling phenomenon caused by moisture absorption, the prevention of a degradation in optical properties and bending of a liquid crystal cell caused by thermal expansion difference or the like, and the formation property of a liquid crystal display apparatus which is of high quality and has excellent durability, a pressure-sensitive adhesive layer having a low moisture absorbing ratio and excellent heat resistance is preferred.

The aforementioned pressure-sensitive adhesive layer may contain, for example, additives to be added to the pressure-sensitive adhesive layer, such as resins of a natural substance or a synthetic substance, in particular, a tackifying resin, a filler such as glass fibers, glass beads, metal powder, or other inorganic powders, a pigment, a colorant, and an antioxidant.

A pressure-sensitive adhesive layer that contains fine particles and exhibits a light diffusion property or the like may be used.

The aforementioned pressure-sensitive adhesive layer can be provided by any appropriate method. Examples thereof include a method of preparing a pressure-sensitive adhesive solution in an amount of about 10 to 40% by weight in which a base polymer or a composition thereof is dissolved or dispersed in any appropriate single solvent such as toluene or ethyl acetate or a solvent made of a mixture, and directly applying the pressure-sensitive adhesive solution onto a polarizing plate or an optical film by any appropriate development method such as a flow casting method or a coating method, or forming a pressure-sensitive adhesive layer on a separator according to the above, and transferring the pressure-sensitive adhesive layer to the polarizer protective film surface.

The pressure-sensitive adhesive layer may also be provided on one surface or both surfaces of a polarizing plate as superimposed layers of different compositions, different kinds, or the like. In a case of providing the pressure-sensitive adhesive layer on both surfaces of the polarizing plate, pressure-sensitive adhesive layers on front and reverse surfaces of the polarizing plate can have different compositions, kinds, thicknesses, and the like.

The thickness of the pressure-sensitive adhesive layer can be appropriately determined in accordance with the use purpose and the adhesive strength, and preferably 1 to 40 μm, more preferably 5 to 30 μm, and particularly preferably 10 to 25 μm. When the thickness of the pressure-sensitive adhesive layer is smaller than 1 μm, durability of the layer degrades. When the thickness of the pressure-sensitive adhesive layer is larger than 40 μm, floats and peeling are likely to occur due to foaming or the like, resulting in an unsatisfactory outer appearance.

In order to enhance the adhesiveness between the surface of the polarizing plate and the above pressure-sensitive layer, an anchor layer can also be provided between the surface of the polarizing plate and the above pressure-sensitive layer.

As the aforementioned anchor layer, preferably, an anchor layer selected from polyurethane, polyester, and polymers containing amino groups in molecules is used, and in particular, polymers containing amino groups in molecules are preferably used. In the polymer containing an amino group in molecules, an amino group in the molecules reacts with a carboxyl group in the pressure-sensitive adhesive or a polar group in a conductive polymer, or exhibits an interaction such as an ion interaction, so satisfactory contactness is ensured.

Examples of the polymers containing amino groups in molecules include polyethyleneimine, polyallylamine, polyvinylamine, polyvinylpyridine, polyvinylpyrrolidine, and a polymer of an amino group-containing monomer such as dimethylaminoethyl acrylate shown in the aforementioned copolymerized monomer of an acrylic pressure-sensitive adhesive.

In order to provide the aforementioned anchor layer with an antistatic property, an antistatic agent can also be added. Examples of the antistatic agent for providing an antistatic property include an ionic surfactant, a conductive polymer such as polyaniline, polythiophene, polypyrrole, and polyquinoxaline, and a metal oxide such as tin oxide, antimony oxide, and indium oxide. Particularly, in view of optical properties, an outer appearance, an antistatic effect, and stability of an antistatic effect under heat or humidity, the conductive polymers are preferably used. Of those, a water-soluble conductive polymer such as polyaniline and polythiophene, or a water-dispersion conductive polymer is particularly preferably used. The reason for this is as follows: in a case of using a water-soluble conductive polymer or a water-dispersion conductive polymer as a material for forming an antistatic layer, the deterioration of an optical film base caused by an organic solvent can be suppressed in the process of coating.

In the present invention, each layer of an optical film, a polarizer, and a polarizer protective film forming the aforementioned polarizing plate, and the pressure-sensitive adhesive layer may be provided with a UV-absorbing ability, for example, by the treatment with a UV-absorbing agent such as a salicylate-based compound, a benzophenol-based

compound, benzotriazol-based compound, a cyanoacrylate-based compound, and a nickel complex salt-based compound.

The polarizing plate of the present invention may be provided on either one of a viewer side and a backlight side of a liquid crystal cell or on both sides thereof without particular limitation.

(Image display apparatus)

Next, an image display apparatus of the present invention will be described. The image display apparatus of the present invention includes at least one polarizing plate of the present invention. Herein, as one example, a liquid crystal display apparatus will be described. However, it is needless to say that the present invention is applicable to any display apparatus requiring a polarizing plate. Specific examples of the image display apparatus to which the polarizing plate of the present invention is applicable include a self-emitting display apparatus such as an electroluminescence (EL) display, a plasma display (PD), and a field emission display (FED). FIG. **2** is a schematic cross-sectional view of a liquid crystal display apparatus according to a preferred embodiment of the present invention. In the illustrated example, a transmission-type liquid crystal display apparatus will be described. However, it is needless to say that the present invention is also applicable to a reflection-type liquid crystal display apparatus or the like.

A liquid crystal display apparatus **100** includes a liquid crystal cell **10,** retardation films **20, 20'** placed so as to interpose the liquid crystal cell **10** therebetween, polarizing plates **30, 30'** placed on outer sides of the retardation films **20, 20',** a light guide plate **40,** a light source **50,** and a reflector **60.** The polarizing plates **30, 30'** are placed so that polarization axes thereof are perpendicular to each other. The liquid crystal cell **10** includes a pair of glass substrates **11, 11'** and a liquid crystal layer **12** as a display medium placed between the substrates. One glass substrate **11** is provided with a switching element (typically, TFT) for controlling the electrooptical properties of liquid crystals, a scanning line for providing a gate signal to the switching element, and a signal line for providing a source signal to the switching element (all of them are not shown). The other glass substrate **11'** is provided with a color layer forming a color filter and a shielding layer (black matrix layer) (both of them are not shown). A distance (cell gap) between the substrates **11** and **11'** is controlled by a spacer **13.** In the liquid crystal display apparatus of the present invention, the polarizing plate of the present invention described above is employed as at least one of the polarizing plates **30** and **30'.**

For example, in a case of the liquid crystal display apparatus **100** employing a TN mode, liquid crystal molecules of the liquid crystal layer **12** are aligned in a state with respective polarization axes being shifted by 90° during application of no voltage. In such a state, injected light including light in one direction transmitted through the polarizing plate is twisted by 90° by the liquid crystal molecules. As described above, the polarizing plates are arranged such that the respective polarization axes are perpendicular to each other, and thus light (polarized light) reaching the other polarizing plate transmits through the polarizing plate. Thus, during application of no voltage, the liquid crystal display apparatus **100** provides a white display (normally white mode). Meanwhile, in a case where a voltage is applied onto the liquid crystal display apparatus **100,** alignment of the liquid crystal molecules in the liquid crystal layer **12** changes. As a result, the light (polarized light) reaching the other polarizing plate cannot transmit through the polarizing plate, and a black display is provided. Displays are switched as described above by pixel by using the active element, to thereby form an image.

Hereinafter, the present invention will be described specifically with reference to examples, but the present invention is not limited to the examples. Unless otherwise noted, parts and % in the examples refer to parts by weight.

<Weight average molecular weight>

The weight average molecular weight was measured by a polystyrene conversion using Shodex GPC system-21 H manufactured by Showa Denko K.K.

<Tg (glass transition temperature, which may be referred to as Tg)>

A precipitate obtained by dissolving a polymer once in tetrahydrofuran, placing it in excessive hexane to reprecipitate it, followed by filtering, was dried under a reduced pressure (1 mmHg (1.33 hPa), three or more hours), whereby a volatile component was removed. Then, the obtained resin was measured for Tg using a DSC apparatus (DSC 8230 manufactured by Rigaku Co., Ltd.). A transparent resin layer or a film were cut minutely in accordance with a measurement cell dimensional, and measured for Tg without conducting the above reprecipitation operation.

<Dealcoholization reaction rate (lactone cyclization ratio)>

The dealcoholization reaction rate was obtained from the decrease in weight due to the dealcoholization reaction from 150°C where the decrease in weight started to 300°C where the decomposition of the polymer started in dynamic

TG measurement, based on the amount of decrease of weight occurring when all the hydroxyl groups were dealcoholized from the polymer composition obtained by polymerization.

More specifically, the decrease in weight from 150°C to 300°C in dynamic TG measurement of a polymer having a lactone ring structure is measured, and the obtained actually measured decrease ratio of weight is assumed to be (X). On the other hand, the theoretical decrease ratio of weight (i.e., weight decrease ratio calculated assuming that 100% dealcoholization occurs on the composition) when it is assumed that all the hydroxyl groups contained in the polymer composition becomes alcohol so as to participate in the formation of a lactone ring to be dealcoholized is assumed to be (Y). More specifically, the theoretical decrease ratio of weight (Y) can be calculated from the molar ratio of a material monomer having a structure (hydroxyl group) participating in the dealcoholization reaction in the polymer, i.e., the content of the material monomer in the polymer composition. These values (X, Y) are substituted in a dealcoholization calculation equation:

$$1 - (\text{actually measured decrease in weight } (X)/\text{theoretical decrease in weight } (Y))$$

to obtain a value, and the value is represented by %, whereby a dealcoholization reaction rate (lactone cyclization ratio) is obtained.

<Melt flow rate>

The melt flow rate was measured at a test temperature of 240°C and a load of 10 kg based on JIS-K6874.

<Measurement of retardation>

The refractive indices nx, ny, and nz of a sample film were measured by an automatic birefringence measurement apparatus (automatic birefringence meter KOBRA21-ADH, manufactured by OJI SCIENTIFIC INSTRUMENTS CO., LTD.), and an in-plane retardation Re and a thickness direction retardation Rth were calculated. The measurement temperature was 23°C. The "in-plane retardation Re(λ) denotes a retardation value in a film (layer) surface measured with light having a wavelength λ nm at 23°C. Re(λ) is obtained by an equation Re(λ) = (nx - ny) x d when the slow axis direction of a film (layer) at a wavelength λ nm and the refractive index in a fast axis are assumed to be nx and ny, respectively, and d(nm) is assumed to be the thickness of the film (layer).

<Measurement of thickness>

In a case where the thickness is less than 10 μm, the thickness was measured with a spectrophotometer for a thin film ("Instantaneous multi-channel photodetection system MCPD-2000" (trade name) manufactured by Otsuka Electrical Co., Ltd.). In a case where the thickness is 10 μm or more, the thickness was measured using a digital micrometer "KC-351C type" manufactured by Anritsu Co., Ltd.

<Wavelength dispersion value D>

The in-plane retardation Re(450) at a wavelength of 450 nm/in-plane retardation Re(600) at a wavelength of 600 nm was calculated as a "wavelength dispersion value D".

<Dimensional change ratio (dimensional behavior, heat resistance test)>

The optical film was allowed to stand at 100°C for 48 hours to obtain a dimensional change ratio.

(Production Example 1: Production of polarizer)

A polyvinyl alcohol film with a thickness of 80 μm was dyed in 5% by weight of an iodine aqueous solution (weight ratio: iodine/potassium iodide = 1/10). Then, the resultant polyvinyl alcohol film was soaked in an aqueous solution containing 3% by weight of boric acid and 2% by weight of potassium iodide. Further, the polyvinyl alcohol film was stretched 6.0-fold in an aqueous solution containing 4% by weight of boric acid and 3% by weight of potassium iodide, and thereafter, soaked in 5% by weight of an aqueous solution of potassium iodide. After that, the resultant polyvinyl alcohol film was dried in an oven at 40°C for 3 minutes, whereby a polarizer with a thickness of 30 μm was obtained.

(Production Example 2: Production of acrylic resin containing lactone ring having lactone cyclization ratio of 20%)

To a 30-L reaction vessel equipped with a stirring apparatus, a temperature sensor, a cooling tube, and a nitrogen introduction tube, 8,000 g of methyl methacrylate (MMA), 2,000 g of methyl 2-(hydroxymethyl) acrylate (MHMA), 10,000 g of 4-methyl-2-pentanone (methylisobutylketone, MIBK), and 5 g of n-dodecylmercaptane were charged, and the mixture thus obtained was raised in temperature to 105°C while nitrogen was being passed in the vessel, whereby the mixture was refluxed. At this time, while 5.0 g of tert-butyl peroxy isopropyl carbonate (Kayacarbon Bic-75 (trade name) manufactured by Kayaku Akzo Corporation) was added as an initiator, and a solution formed of 10.0 g of tert-butyl peroxy isopropyl carbonate and 230 g of MIBK was dropped over 4 hours, a solution polymerization was conducted under refluxing (about 105°C to 120°C), and aging was conducted further over 4 hours.

To the obtained polymer solution, 30 g of stearyl phosphate/distearyl phosphate mixture (Phoslex A-19 (trade name) manufactured by Sakai Chemical Industrial Co., Ltd.) was added, and a cyclization condensation reaction was conducted for 5 hours under refluxing (about 90°C to 120°C). Then, the polymer solution obtained by the above cyclization condensation reaction was introduced into a bent-type screw biaxial extruder ($\Phi$ = 29.75 mm, L/D = 30) with one rear bent and four front bents at a barrel temperature of 260°C, a rotation number of 100 rpm, a decompression degree of 13.3 hPa (10 to 300 mmHg) at a processing speed of 2.0 kg/time in terms of a resin amount conversion. A cyclization condensation reaction and degassing were performed in the extruder, and the polymer solution was extruded, whereby a transparent pellet of an acrylic resin containing a lactone ring was obtained.

The lactone cyclization ratio of the pellet of an acrylic resin containing a lactone ring was 20%, the weight average molecular weight thereof was 156,000, the melt flow rate thereof was 3.9 g/10 minutes, and Tg (glass transition temperature) thereof was 123°C.

(Production Example 3: Preparation of polyvinyl alcohol-based adhesive aqueous solution)

A polyvinyl alcohol-based adhesive aqueous solution was prepared in which the concentration of an aqueous solution containing 20 parts by weight of methylol melamine with respect to 100 parts by weight (acetylation degree: 13%) of a polyvinyl alcohol resin denatured with an acetoacetyl group was adjusted to be 0.5% by weight.

(Example 1)

To an extruder, 400 g of the acrylic resin containing a lactone ring (lactone cyclization ratio: 20%) obtained above and 100 g of a styrene/maleic anhydride copolymer were supplied, melt-kneaded at 250°C, extruded from a T-die, cooled with water by a cooling roll to be taken up, and stretched with a sequential biaxial extruder, whereby an optical film (1) with a thickness of 60 μm was obtained.

The wavelength dispersion value D of the optical film (1) was 0.83.

The Tg of the optical film (1) was 123°C.

The dimensional change ratio of the optical film (1) was 0.4%.

(Example 2)

To an extruder, 400 g of the acrylic resin containing a lactone ring (lactone cyclization ratio: 20%) obtained above and 100 g of a fluorene were supplied, melt-kneaded at 250°C, extruded from a T-die, cooled with water by a cooling roll to be taken up, and stretched with a sequential biaxial extruder, whereby an optical film (2) with a thickness of 60 μm was obtained.

The wavelength dispersion value D of the optical film (2) was 0.80.

The Tg of the optical film (2) was 120°C.

The dimensional change ratio of the optical film (2) was 0.37%.

(Example 3)

To an extruder, 400 g of the acrylic resin containing a lactone ring (lactone cyclization ratio: 20%) obtained above and 100 g of a styrene/acrylonitrile copolymer were supplied, melt-kneaded at 250°C, extruded from a T-die, cooled with water by a cooling roll to be taken up, and stretched with a sequential biaxial extruder, whereby an optical film (3) with a thickness of 60 μm was obtained.

The wavelength dispersion value D of the optical film (3) was 0.96.

The Tg of the optical film (3) was 106°C.

The dimensional change ratio of the optical film (3) was 1.3%.

(Example 4)

(Production of polarizing plate)

The optical film (1) obtained in Example 1 of the present invention was attached to both surfaces of the polarizer obtained in Production Example 1 with the polyvinyl alcohol-based adhesive obtained in Production Example 3. The resultant was dried at 70°C for 10 minutes to obtain a polarizing plate.

(Pressure-sensitive adhesive)

As a base polymer, a solution (solid content: 30%) containing an acrylic polymer with a weight average molecular weight of 2,000,000 made of a copolymer of butyl acrylate: acrylic acid: 2-hydroxyethyl acrylate = 100 : 5 : 0.1 (weight ratio) was used. To the above acrylic polymer solution, 4 parts of COLONATE L manufactured by Nippon Polyurethane Industry Co., Ltd., which was an isocyanate-based polyfunctional compound, 0.5 parts of an additive (KBM403 manufactured by Shin-Etsu Silicone Co., Ltd.), and a solvent (ethyl acetate) for adjusting the viscosity were added with respect to 100 parts of a polymer solid content, whereby a pressure-sensitive adhesive solution (solid content: 12%) was prepared. The pressure-sensitive adhesive solution was applied to a release film (polyethylene terephthalate base material: Dia Foil MRF38 manufactured by Mitsubishi Chemical Polyester Film Corporation) so that the thickness after drying became 25 μm, followed by drying with a hot-air circulation type oven, whereby a pressure-sensitive adhesive layer was formed.

(Anchor layer of polarizing plate)

A polyethyleneimine adduct (Polyment NK380 (trade name) manufactured by Nippon Shokubai Co., Ltd.) of a polyacrylic acid ester was diluted 50-fold with methylisobutylketone. The resultant was applied to a nylon resin side of a polarizing plate with a wire bar (#5) so that the thickness after drying became 50 nm, followed by drying.

(Production of pressure-sensitive adhesive polarizing plate)

The release film with the above pressure-sensitive adhesive layer applied thereto was attached to an anchor layer of the above polarizing plate, whereby a pressure-sensitive adhesive polarizing plate was produced.

(Evaluation)

(Evaluation of optical film)

The optical films (1) to (3) obtained in Examples 1 to 3 have high heat resistance, high transparency, and high mechanical strength, and have a sufficient retardation compensation function with a reverse wavelength dispersion characteristics.

(Evaluation of polarizing plate)

As a result of evaluating the outer appearance of the obtained polarizing plate, no defects were observed in the outer appearance.
The optical film and polarizing plate of the present invention can be preferably used for various kinds of image display apparatuses (liquid crystal display apparatus, organic EL display apparatus, PDP, etc.).
Many other modifications will be apparent to and be readily practiced by those skilled in the art without departing from the scope and spirit of the invention. It should therefore be understood that the scope of the appended claims is not intended to be limited by the details of the description but should rather be broadly construed.

## Claims

1. An optical film, comprising a (meth)acrylic resin having a lactone ring as a main component, wherein an in-plane retardation Re(450) at a wavelength of 450 nm/an in-plane retardation Re(600) at a wavelength of 600 nm is less than 1.0.

2. An optical film according to claim 1, comprising a negative birefringence material.

3. An optical film according to claim 2, wherein the negative birefringence material is contained in a ratio of 5 to 40% by weight with respect to the (meth)acrylic resin having a lactone ring.

4. An optical film according to claim 2, wherein the negative birefringence material is at least one kind of a styrene-based polymer and fluorene.

5. An optical film according to claim 4, wherein the styrene-based polymer is at least one kind selected from the group consisting of a styrene/maleic anhydride copolymer, a styrene/acrylonitrile copolymer, and a styrene/maleimide copolymer.

6. An optical film according to claim 1, wherein Tg is 110°C or more.

7. A polarizing plate, comprising the optical film according to any one of claims 1 to 6 on at least one surface side of a polarizer.

8. A polarizing plate according to claim 7, comprising an adhesive layer between the polarizer and the optical film.

9. A polarizing plate according to claim 8, wherein the adhesive layer is formed of a polyvinyl alcohol-based adhesive.

10. A polarizing plate according to claim 7, comprising an easy-adhesive layer between the polarizer and the optical film.

11. A polarizing plate according to claim 7, further comprising as at least one of an outermost layer a pressure-sensitive adhesive layer.

12. An image display apparatus, comprising at least one of the polarizing plate according to any one of claims 7 to 11.

FIG. 1

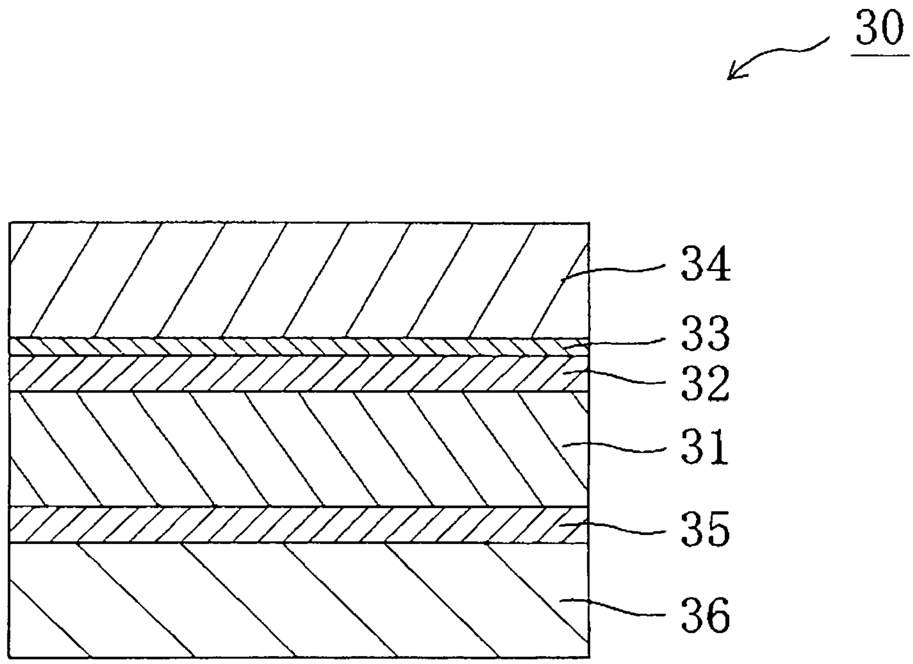

FIG. 2

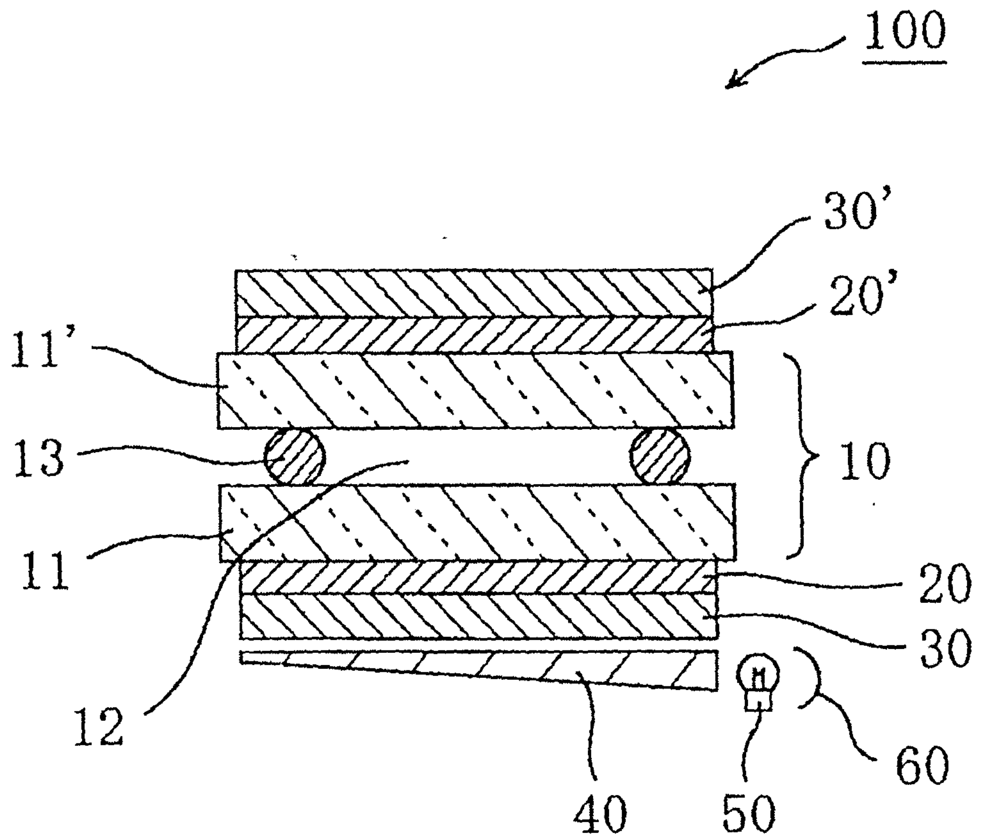

European Patent Office

# EUROPEAN SEARCH REPORT

Application Number
EP 07 02 3283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/019112 A (JSR CORP [JP]; SEKIGUCHI MASAYUKI [JP]; USHINO TAKUHIRO [JP]; KAWASHIM) 23 February 2006 (2006-02-23) * paragraphs [0041], [0044], [0065]; claim 1 * | 1-12 | INV. G02B5/30 B29C55/20 C08L1/12 G02F1/1335 |
| A,D | JP 2001 151814 A (NIPPON CATALYTIC CHEM IND) 5 June 2001 (2001-06-05) * the whole document * | 1-12 | |
| A | JP 2006 220732 A (NITTO DENKO CORP) 24 August 2006 (2006-08-24) * the whole document * | 1-12 | |

TECHNICAL FIELDS SEARCHED (IPC)

G02B
B29C
C08L
G02F

The present search report has been drawn up for all claims

| Place of search | Date of completion of the search | Examiner |
|---|---|---|
| Munich | 18 March 2008 | Michel, Alain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

**ANNEX TO THE EUROPEAN SEARCH REPORT ON EUROPEAN PATENT APPLICATION NO.** EP 07 02 3283

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2008

| Patent document cited in search report | Publication date | Patent family member(s) | Publication date |
|---|---|---|---|
| WO 2006019112 A | 23-02-2006 | CN 101006368 A | 25-07-2007 |
| | | EP 1780562 A1 | 02-05-2007 |
| | | JP 2006058540 A | 02-03-2006 |
| | | KR 20070064325 A | 20-06-2007 |
| JP 2001151814 A | 05-06-2001 | NONE | |
| JP 2006220732 A | 24-08-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006345677 A
- JP 2000356714 A
- JP 2002258051 A
- JP 2000230016 A
- JP 2001151814 A
- JP 2002120326 A
- JP 2002254544 A